# EUROPEAN PATENT APPLICATION

(11) **EP 2 975 573 A1**
(43) Date of publication of application: **20.01.2016**
(21) Application number: 14465513.1
(22) Date of filing: 17.07.2014
(51) Int. Cl.: G06T 1/20

(54) **Display system and method**

(71) Applicant: Continental Automotive GmbH, 30165 Hannover (DE)
(72) Inventor: Toader, Ovidiu, 300776 Timisoara (RO)

(57) **Abstract**

Display systems in in-car display systems frequently comprise multiple processors. A first processor may process application information, and a second processor can be optimized for graphics display. In certain circumstances, though, the first processor may be underused. This application discusses a way to allocate portions of display information between different processors, and thus to utilize spare processing cycles on the first processor.

## Description

### Field of the invention

The invention relates to the field of automotive applications. In particular, the invention relates to a display method, a display system for vehicles, a computer program element, a computer-readable medium, and a road vehicle comprising the display system.

### Background

In-car electronic systems are continually being supplemented with multi-media applications requiring advanced image processing capabilities.

WO 2012/158817 describes rendering mode selection in graphics processing units. In this display system, frames are rendered in a graphics processing unit, based on metrics measured by a central processing unit.

Such systems can, though, be further improved.

### Summary of the invention

It is an object of the invention to provide for an improved display system.

This object is solved by the features of the independent claims. Developments of the invention are stated in the dependent claims, and the following description.

According to the invention, a display system for a vehicle is provided. The display system comprises a first processor, a second processor, a first buffer connected to the first processor, and a second buffer connected to the second processor.

The first processor is configured to categorise display information as being of at least a first or a second category. The first processor is configured to evaluate a performance metric of a display system. The first processor is configured to allocate a first portion of the display information for rendering on the first processor of the display system, and to allocate a second portion of the display information for rendering on the second processor of the display system. The rendering is performed based on the performance metric and on the category of the display information. The first processor is configured to render the first portion of the display information being of the first category, and the second processor is configured to render the second portion of the display information being of the second category. The first processor is configured to store the first rendered portion in a first buffer, and the second processor is configured to store the second rendered portion of the display information in a second buffer. The first and/or the second processor is configured to combine the first and second rendered portions stored in the first and second buffers into a graphics frame. The first and/or second processor is configured to display the graphics frame.

According to the invention, a display method is provided comprising:
(a) categorising display information as being of at least a first or a second category;
(b) evaluating a performance metric of a display system configured to display the display information;
(c) allocating a first portion of the display information for rendering on a first processor of the display system, and allocating a second portion of the display information for rendering on a second processor of the display system, based on the performance metric and on the category of the display information;
(d) rendering the first portion of the display information being of the first category using the first processor, and rendering the second portion of the display information being of the second category using the second processor;
(e) storing the first rendered portion of the display information in a first buffer, and storing the second rendered portion of the display information in a second buffer;
(f) combining the first and second rendered portions stored in the first and second buffers into a graphics frame;
(g) displaying the graphics frame.

According to an embodiment of the invention, a display method as described previously is provided, wherein, after step (a), there is a step of:
(a1) allocating to a first virtual layer in the first buffer the display information of the first category, and allocating to a second virtual layer in the second buffer the display information of the second category.

According to an embodiment, there is a provided a display method as described previously, wherein in the combining step (f), the first rendered portions are higher in a z-order of the display information compared to the second rendered portion.

According to an embodiment, there is provided a display method as described previously, wherein in step (c), the first portion of the display information comprises display information of a graphical user interface.

According to an embodiment, there is provided the display information as described previously, wherein the performance metric of the display system comprises a comparison of spare processing cycles between the first and the second processors.

According to an embodiment, there is a provided a display method as described previously, wherein in step (c), the first portion and the second portion each comprise different sections of the same graphics frame.

According to an embodiment, there is provided a display method as described previously, wherein in step (c), the first portion and the second portion each comprise complete graphics frames to be displayed successively in time.

According to an embodiment, there is provided a display method as described previously, wherein after step (b), there is the step of:
(b1) evaluating a complexity metric of the display information;
   and after step (c), there is the step of:
(c1) allocating first portions and second portions of the display information for rendering between a first or a second processor, based additionally on the complexity metric of the display information.

According to an embodiment, there is provided a display method as described previously, wherein the first buffer is associated with the first processor, and the second buffer is associated with the second processor.

According to an embodiment, there is provided a display system as described previously, wherein the first processor is configured to allocate to a first virtual layer in the first buffer the display information of the first category, and to allocate to a second virtual layer in the second buffer the display information of the second category.

According to an embodiment, there is provided a display system as described previously, wherein the first or second processors are configured to combine the first rendered portions of a higher z-order of the display information compared to the second rendered portion.

According to the invention, a computer program element is provided which, when being executed on one or more processors of a display system, instructs the display system to perform the method steps as recited previously.

According to the invention, a computer-readable medium on which a program element as previously described is stored, is provided.

According to the invention, a road vehicle comprising a display system as previously described is provided.

Advantageously, a display system according to the invention enables display information to be rendered using spare processing cycles on a first processor of a multiprocessor system, and thus the sharing of a processing load.

The processing load is associated with the conversion (rendering) of display information from vector graphics information, or video processing (for example) into pixels stored in a graphical display buffer. Often, in a multiprocessor system, either a first or a second processor will have spare processing cycles available. The spare processing cycles may be used to render pixels of a graphical frame for display.

Additionally, applications on the first processor may be subject to less latency, owing to bus communication considerations, than a second processor. Therefore, the ability to process pixels of a graphical frame on the first processor can reduce latency in a display system. Low latency is useful when the processed pixels concerned are involved in graphical user interface functions, for example.

In this application, the term "display information" is defined as information provided by an operating system to a graphics driver which must be rendered in the form of pixels on a screen for display. The display information may, for example, be vector graphics information, or encoded video.

In this application, the term "performance metric of a display system" refers to a metric representative of the relative processor loading between a first processor and a second processor. Therefore, if a first processor is operating at 80% of its load (in MIPS), and if the second processor is running at 90% of its total performance (in MIPS), then there is a differential of 10% in performance between the first and the second processor, and a performance metric can be so evaluated.

In the following application, the term "portion" relates to a fraction of a region of display information having distinct properties from some other portion of the region of display information. For example, one portion of the display information could be associated with a graphical user interface (GUI). Such portion would be composed of pixels having negligible spatial and temporal variance in colour and intensity. A typical graphical user interface menu is composed of only two colours. Other portions of the display information may be more complex. For example, other portions may comprise areas of image, or video information which typically have a significant spatial and temporal variance in pixel colour and intensity.

In the following application, the term "virtual layer" refers to a hierarchical association between portions to be displayed in the memory of a display system. Display information from one portion relating to a graphical user interface may be comprised in a first virtual layer. Display information comprising another portion containing image information may be selected for display by an operating system in a second virtual layer. Thus, the term "virtual layer" refers to a way of categorising display information in a buffer system.

In this application, the term "z-order" is a concept related to the ordering of display information in a frame buffer. In a situation where a first portion of information containing other graphical user interface information must be displayed in precedence to a second portion of display information containing graphical information, the first portion will be higher in a z-order of the display information than the second portion, because the graphical user interface information must be visible to the user. In other words, in a display system with several virtual layers, different virtual layers may be arranged in a different z-order. The higher in the z-order the information is, the higher the priority it has when being displayed on a two-dimensional screen.

Therefore, it can be seen as the gist of the invention that spare processing cycles on a first processor in a multiprocessor system can be used to render display information, even when a second processor is optimized for rendering display information.

A computer-readable medium may be a floppy disk, a hard drive, a CD, a DVD, a USB storage device, a RAM, a ROM, and an EPROM. A computer-readable medium may also be a data communication network, for example the Internet, which allows downloading of program code.

These and other aspects of the present invention will become apparent from and elucidated with reference to the embodiments described hereinafter.

Exemplary embodiments of the present invention will now be described in the following, with reference to the following drawings.

### Brief description of the drawings

- Fig. 1: shows a display system.
- Fig. 2: shows an exemplary representation of a display system.
- Fig. 3: shows a typical screen displayed on a display system in a vehicle.
- Fig. 4: shows the layers of a vehicular display divided into first and second portions.
- Fig. 5: shows a set of virtual display layers in the graphical driver of a graphical user interface.
- Fig. 6: shows a display method.
- Fig. 7: shows a road vehicle comprising a display system.

### Detailed description of embodiments

The following detailed description is merely exemplary in nature, and is not intended to limit the application and uses.

Furthermore, there is no intention to be bound by any theory presented in the preceding background or summary or the following detailed description.

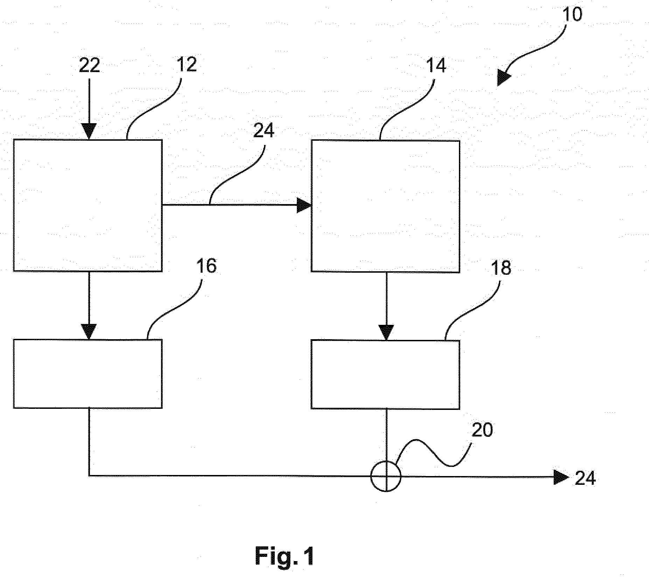

Fig. 1 shows a schematic diagram of a display system 10. The system comprises a first processor 12, a second processor 14, a first buffer 16 connected to the first processor, and a second buffer 18 connected to the second processor.

The first processor is configured to categorise display information as being of at least a first or a second category.

The first processor is configured to evaluate a performance metric of a display system. The first processor is configured to allocate a first portion of the display information for rendering on the first processor of the display system, and to allocate a second portion of the display information for rendering on the second processor of the display system, based on the performance metric and the category of the display information.

The first processor is configured to render the first portion of the display information being of the first category, and the second processor is configured to render the second portion of the display information being of the second category.

The first processor is configured to store the first rendered portion in a first buffer, and the second processor is configured to store the second rendered portion of the display information in a second buffer.

The first and/or the second processor is configured to combine the first and second rendered portions stored in the first and second buffers into a graphics frame.

The first and/or the second processor is configured to display the graphics frame.

Also illustrated in Fig. 1 is an input 22 of a display system, in which display information may be loaded into the first processor, combiner 20 by which information in the first buffer 16 and the second buffer 18 may be combined, and output 24, which allows display information rendered by the first processor 12 and the second processor 14 to be output to a display device.

According to an embodiment, the first processor 12 shown in Fig. 1 is a central processing unit (CPU), and the second processor 14 may be a graphics processing unit (GPU) to render graphics data for display. The CPU may be implemented on, for example, an ARM (TM) processor, although may other suitable processors will be known to the person skilled in the art. The GPU function of the second processor may be performed by another CPU, a specialized GPU, a digital signal processor (DSP), a field programmable gate array (FPGA) configured with a processor, or any other suitable processing means capable of high computation intensity compared to the first processor.

In a conventional in-car display system, a first processor, acting as a CPU, could render display information into the first buffer 16 for display. A CPU has diverse tasks to perform, and can quickly become overloaded with graphical processing duties.

One solution to this is to connect a graphical processing unit (GPU), as a second processor 14 to the first processor 12 via a bus 24. Therefore, the first processor 12 provides display instructions to the second processor 14 via the bus 24. The second processor 14 acts to render the display information according to the instructions passed from the first processor 12, and the display information is saved in buffer 18.

A situation can occur where a substantial number of spare processing cycles (measured in MIPS, for example) accumulate on the first processor 12. If no execution instructions are issued in respect of the spare processing cycles, then their computational potential may be regarded as wasted.

The availability of extra cycles on the first processor 12 can be monitored, and the processing of graphical information is performed on the first processor 12 when this is suitable.

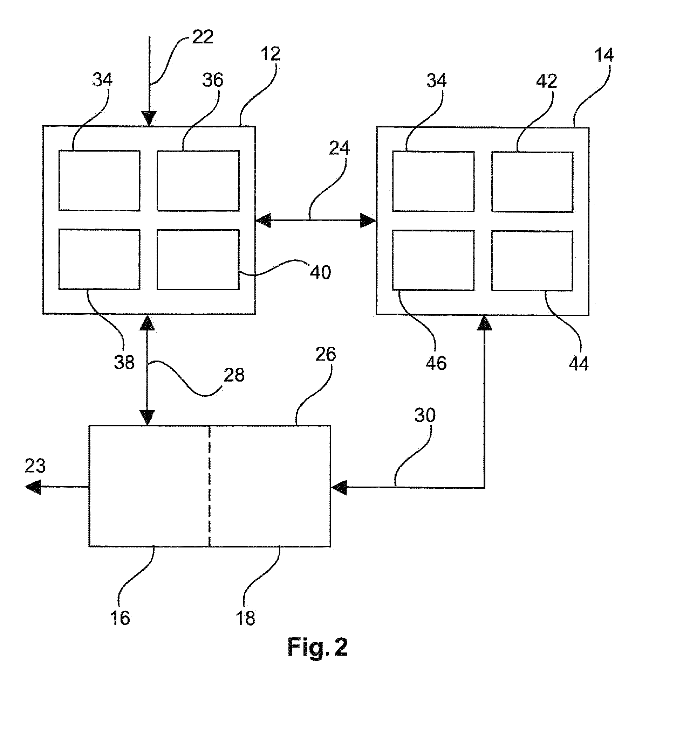

Fig. 2 shows an example of a display system. Fig. 2 shows a first processor 12, a second processor 14 and a bus 24 connecting them. Data is input via bus 22. There is also shown a frame buffer 26 which contains combined first buffers 16 and second buffers 18.

Bus 28 connects the first processor 12 with the frame buffer 26 and first buffer 16. Buffer 30 connects the second processor 14 with the frame buffer 26 and second buffer 18. The buffer 26 contains an output connection 24 to display, such as an LCD screen.

Therefore, either the first processor 12, or the second processor 14, can render portions of display information for display, and then write the rendered portions into subdivisions 16 or 18 of the frame buffer 26.

Entire frames of display information are read out from output 24 to a display. It will be appreciated that the frame buffer 26 may in an embodiment comprise separate first buffers 16 and second buffers 18.

According to an embodiment, the first processor 12 comprises a central processing unit (CPU). Represented inside the first processor 12 are functions which are executed by a CPU. The first processor 12, when acting as a CPU, may execute a graphics application 34, a graphics API (application programming interface) 36, a graphics driver 38, and performance metric evaluation means 40.

The second processor 14, configured as a graphics processing unit, may comprise a tile buffer 42, a rendering engine 44, and a second processor performance counter 46.

The second processor 14 is connected to the frame buffer 26 via bus 30. The buses 22, 24, 28, 24 and 30 as illustrated in Fig. 2 are bidirectional buffers and enable bidirectional communication.

A graphics application 34 executed on a first processor 12 may include a web browser, a car mapping and navigation application, video streaming applications, video telephone applications, email applications, or other applications that generate a visual application for presentation to a user.

Graphics driver 38 inside the first processor 12 translates application instructions into commands which are performed on the first processor 12 and/or the second processor 14.

The graphics API 36 may include the open graphics library (open GL), open GL for embedded systems, or open VG (vector graphics). Certain graphics applications 34 may contain calls to the API to more efficiently display vector graphics, for example.

In the illustrated embodiment, the graphics driver runs on the CPU. In some cases, the second processor 14 may separately execute one or more graphics applications.

The graphics application is executed by the first processor 12. It issues application instructions from the graphics application which require the CPU and/or the GPU to generate an image. The instructions may also be generated from application programming interface (API) calls.

The second processor 14, acting as a graphics processing unit (GPU), performs graphics commands issued from the first processor 12, acting as a CPU. The GPU may customized to accelerate one or more of the functions of pixel blending, vertex shading, rasterization, or shading, although many other operations will occur to the skilled person.

The second processor 14 stores the rendered graphics data that it has produced in buffer 18. The graphics data may be rendered as a set of frames, a single frame, or as a fraction of a frame. In the illustrated example in Fig. 2, the GPU includes a rendering engine.

According to an embodiment, first processor 12 and second processor 14 may execute separate graphics applications. In this case, a graphics driver is needed for the first processor 12 and a separate graphics driver is needed for the second processor 14.

In the example of Fig. 2, the second processor 14 renders the graphics data directly to the first buffer 18, a subdivision of the frame buffer 26. The rendering engine 44 makes direct read and write calls to the frame buffer 26 containing the second buffer 18.

According to an embodiment, the second processor 14 performs a "tiling pass" wherein graphics data is divided into a plurality of tiles which are rendered by the rendering engine 44 into the tile buffer 42 on the second processor 14. When the tiling pass is complete, the tile buffer is read out to the second buffer 18 of the frame buffer 26 in one operation.

The display system also comprises a performance metric evaluation means 40 contained in the first processor 12 and a second processor performance counter 46 contained inside the second processor 14. The performance metric evaluation means 40 and the second processor performance counter 46 are both configured to collect performance data, or performance metrics, of their processors.

Metrics collected by the performance metric evaluation means may comprise the computational load, in millions of instructions per second (MIPS). Alternatively, the performance metric evaluation means can measure the number of floating point operations, in other words mega flops (MFLOPS).

According to an embodiment, the performance metric evaluation means 40 and the second processor performance counter 46 can also measure performance metrics pertinent to graphics display. In the first processor 12, such metrics can be output as primitives by the graphics API, or the graphics driver. In the second processor 14, such metrics may be output as primitives by the rendering engine.

The metrics may include the number of rendered targets, the dimensions of rendered targets, the number of vertices or fragments, the location of fragments, the type of application, the number of graphics API calls.

According to an embodiment, the performance metric of the display system comprises a comparison of spare processing cycles between the first and the second processors.

This comparison may be accomplished, for example, by dividing the number of unused MIPS measured by the performance metric evaluation means 40 with the number of unused MIPS measured by the second processor performance counter 46. In a situation where the second processor 14 was operating at 50% of its capacity, and the first processor 12 was operating at 10% of its total capacity, it could be possible to process extra frames on the first processor 12.

According to an embodiment, the graphics application, the graphics driver, and/or the graphics API are configured to monitor the performance metric of the display system, and to use the information to allocate portions of display information between the first processor 12, and the second processor 14, based on the performance metric.

The performance metric of the display system is calculated from data issued by the performance metric evaluation means 40 and the second processor performance counter 46).

The operation of the display system 10 will now be described. In operation, display information is input to the first processor 12 via bus 22.

The first processor 12 executes graphics application code, which produces display information. The display information is at a high level, for example, containing information of vertices and polygons which must be rendered.

The first processor 12 carries out an initial categorization step of the generated display information as being of at least a first or second category. For example, the input display information may be in a first category when associated with "pop-up" windows of a GUI, or the display information may be categorized as being of a second category when associated with a bit map image of a video or a map display. Many other categorization techniques will be known to the skilled person, though.

Having been so categorized, the CPU then evaluates a performance metric of the display system. As described previously, this will usually be a direct comparison of the spare processing load of the first processor versus the spare processing load of the second processor 14.

The first processor 12 then allocates a first portion of the display information to be rendered by itself, during its spare processing cycles.

According to an example, portions of display information representing a graphical user interface are rendered on the first processor 12. Portions of display information for rendering on the second processor 14 are transmitted along bus 24 into the second processor 14 and rendered by the second processor.

Having so rendered the first portion of the display information, the first processor stores the rendered first portion in the in the first buffer 16 of the frame buffer 26. Likewise, the second processor 14 stores its rendered second portions in the second buffer 18 of the frame buffer 26.

According to an embodiment, the first buffer 16 and the second buffer 18 are subdivisions of a frame buffer 26.

According to an embodiment, the first buffer 16 and the second buffer 18 are separate buffers.

Finally, the first and second rendered portions are combined into a graphics frame by reading out the frame buffer. The graphics frame is displayed after transmission through bus 23.

Although the previous description of the operation of the system was concerned with the division of first or second categories of display information as being related to a GUI and a video or bitmap, it will be appreciated by the person skilled in the art that this is an exemplary case, and there are many criteria for dividing information into a first or a second category.

According to an embodiment, display information requiring low computational effort is categorized as being in the first category for rendering on the first processor 12, and information categorized as requiring a higher computational effort is categorized as display information being of the second category for rendering on the second processor 14.

In other words, it is possible to use spare processor cycles of the first processor, where this is deemed to be appropriate. Typical display system hardware includes a CPU and a processor suitable for highly processing intensive tasks, such as a GPU. There is a possibility to share the load generated by frame calculation between the first processor 12 and the second processor 14 when the first processor has spare processing cycles.

The latency of graphics processing carried out by the first processor 12 may, in certain circumstances, be lower than required with a second processor (14), because there is no need to send display instructions over a bus system. Therefore, for display tasks requiring prompt feedback with other CPU functions, such as a touchscreen input function, lower latency is provided with the display method discussed above.

According to an embodiment, the first processor calculates, a priori, the computational effort required to render display information on the first processor to ensure that the first processor is not overloaded.

It is important not to overload the first processor, because the first processor has overall responsibility for software execution, and user interface management. Overloading the first processor could lead to temporal instability of applications executed on it, and a reduction in the quality of the user experience.

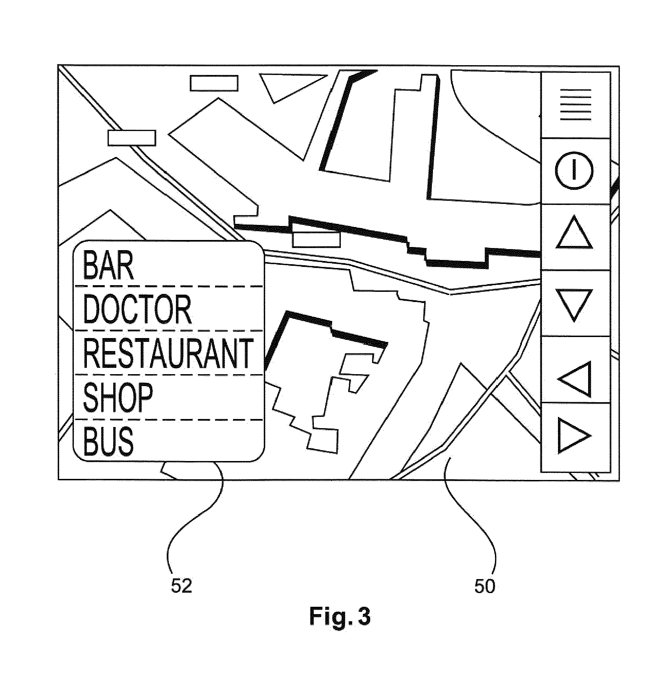

Fig. 3 shows an example set of display information incorporating information to be categorized as being of a first or a second category. What is shown is a map display 50 comprising a complex bitmap image. Superimposed on the bitmap image is a simpler bitmap image comprising part of a graphical user interface display 52.

The rendering of the map image 50 is significantly more complex and requires more computational effort than the rendering of the relatively simple bitmaps associated with the graphical user interface elements 52.

Separation of the first map image and the second graphical user interface image in the first and second portions enables the relatively simple graphical user interface processing to be performed on spare clock cycles of the CPU (first processor 12).

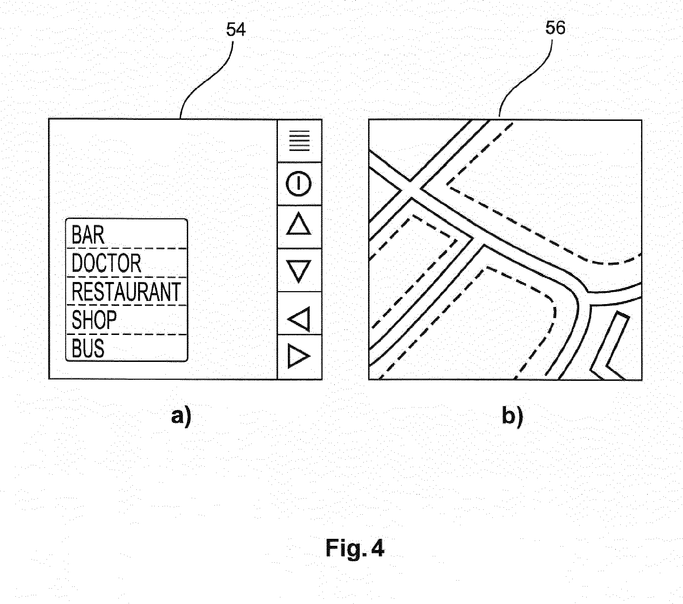

Fig. 4 shows the display information after categorization into a first or a second category. Here, information of a first category 54 and information of a second category 56 is shown. It is seen that information relating to the graphical user interface has been separated from the bit map information of the map 56 for processing on the first processor 12 and the second processor 14 respectively.

Each processor uses a different subdivision of the frame buffer 26 (16, 18. The first components, which are the lowest in the z-order, are painted on the buffer of the second processor 14. The remaining components (the highest in the z-order) are painted on the first processor's buffer.

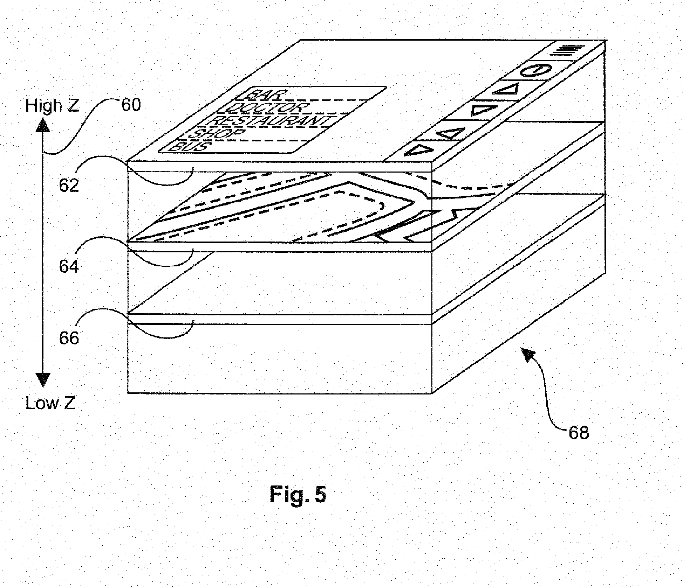

Fig. 5 provides an abstract illustration of the contents of the frame buffer 26. Arrow 60 represents the order of a displayed frame in the z-order. Effectively, this determines whether one image is rendered on top of, or behind, another image.

A graphical user interface is higher in the z-order than an underlying bitmap image, such as a map, upon which the graphical user interface is displayed. In Fig. 5, the graphical user interface is illustrated at layer 62. A map is illustrated at layer 64. Another application, which could be a video, or a software application, is illustrated at 66. Together, the stack 68 of layers can be considered as a set of virtual layers. These are stored in the frame buffer 26 in a certain memory pattern corresponding to the layers shown in Fig. 5.

Therefore, according to an embodiment, a display system is provided, which is configured to allocate to a first virtual layer in the first buffer the display information of the first category, and allocate to a second virtual layer in the second buffer the display information of the second category.

According to an embodiment, a display system is provided wherein the first rendered portions are higher in a z-order of the display information compared to the second rendered portion. The graphical user interface layer 62 comprised in the upper z-order components is processed on the first processor 12, and the remaining components 64 and 66 are processed on the second processor 14.

According to an embodiment, a system is provided wherein the performance metric of the display system comprises a comparison of spare processing cycles between the first and the second processors.

According to an embodiment, a system is provided wherein the first portion and the second portion each comprise different sections of the same graphics frame. Therefore, in this embodiment, spare processing cycles are used to render different portions of the same frame on different processors.

According to an embodiment, the first portion and the second portion of the display information each comprise complete graphics frames to be displayed successively in time. Therefore, spare processing cycles on the first processor may be shared spatially over one frame, or temporally, over a succession of frames.

According to an embodiment, a display system is provided wherein a complexity metric of the display information is evaluated by the first processor before categorisation of the information into first or second categories for rendering. Subsequently, first portions and second portions of the display information are allocated for rendering between a first 12 or a second 14 processor based additionally on the complexity metric of the display information.

The complexity metric may comprise, for example, a variance of pixel colour values, or an assessment of the number of vertices in an image to be displayed. According to this embodiment, display information is allocated between the first and second processor based on the estimated amount of computational load required for rendering the portions.

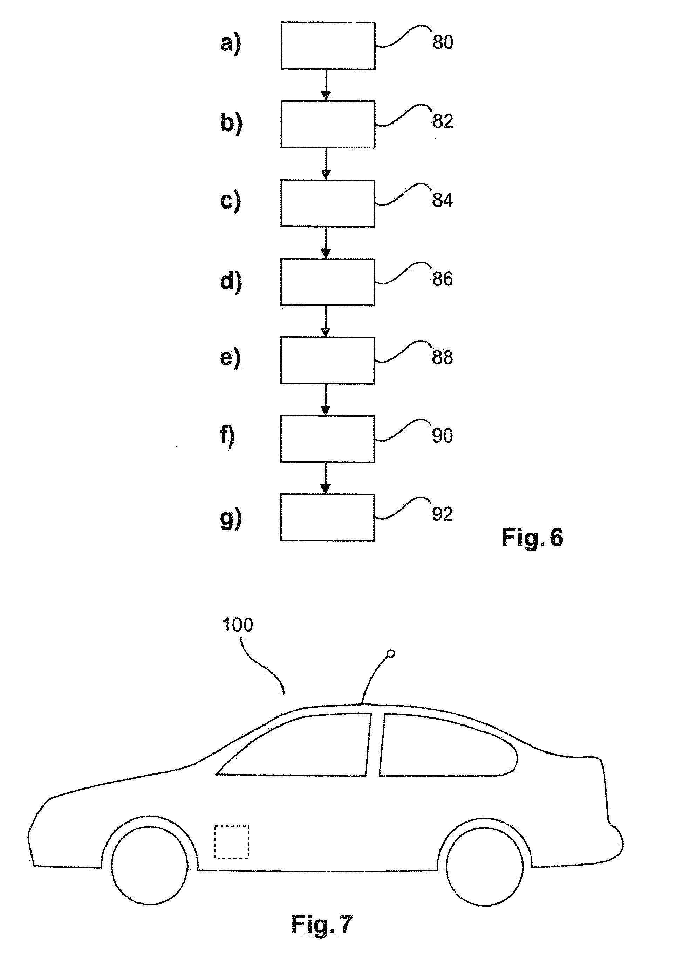

Fig. 6 shows a method according to the invention. There is provided a display method comprising:
(a) categorising display information as being of at least a first or a second category;
(b) evaluating a performance metric of a display system configured to display the display information;
(c) allocating 84 a first portion of the display information for rendering on a first processor of the display system, and allocating a second portion of the display information for rendering on a second processor of the display system, based on the performance metric and on the category of the display information;
(d) rendering 86 the first portion of the display information being of the first category using the first processor, and rendering the second portion of the display information being of the second category using the second processor;
(e) storing 88 the first rendered portion of the display information in a first buffer, and storing the second rendered portion of the display information in a second buffer;
(f) combining 90 the first and second rendered portions stored in the first and second buffers into a graphics frame;
(g) displaying 92 the graphics frame.

According to the invention, there is provided a road vehicle 100 comprising display system as previously described.

According to the invention, there is provided a computer program element which, when being executed on one or more processors of a display system, instructs the display system to perform the method steps as previously described.

According to the invention, there is provided a computer-readable medium on which a program element according to the previous description is stored.

It should be noted that the term "comprising" does not rule out a plurality of elements. It is further noted that features described with reference to one of the above exemplary embodiments can also be used in combination with other features of other exemplary embodiments described above.

Moreover, while at least one exemplary embodiment has been presented in the foregoing summary and detailed description, it should be appreciated that a vast number of variations exist.

The exemplary embodiments outlined are examples, and are not intended to limit the scope, applicability or configuration in any way.

Rather, the foregoing summary and detailed description will provide those skilled in the art with a convenient teaching for implementing an exemplary embodiment, it being understood that various changes may be made in the function and arrangement of the elements described in the exemplary embodiment without departing from the scope as set forth in the appended claims and their legal equivalents.

## Claims

1. A display system (10) for a vehicle, comprising:
a first processor (12);
a second processor (14);
a first buffer (16) connected to the first processor;
a second buffer (18) connected to the second processor;
wherein the first processor is configured to categorize display information as being of at least a first or a second category;
wherein the first processor is configured to evaluate a performance metric of a display system;
wherein the first processor is configured to allocate a first portion of the display information for rendering on the first processor of the display system, and to allocate a second portion of the display information for rendering on the second processor of the display system, based on the performance metric and the category of the display information;
wherein the first processor is configured to render the first portion of the display information being of the first category, and the second processor is configured to render the second portion of the display information being of the second category;
wherein the first processor is configured to store the first rendered portion in a first buffer, and the second processor is configured to store the second rendered portion of the display information in a second buffer;
wherein the first and/or the second processor is configured to combine the first and second rendered portions stored in the first and second buffers into a graphics frame;
wherein the first and/or the second processor is configured to display the graphics frame.

2. The display system (10) of claim 2, wherein the first processor (12) is configured to allocate to a first virtual layer in the first buffer (16) the display information of the first category, and to allocate to a second virtual layer in the second buffer (18) the display information of the second category.

3. The display system (10) of claims 1 or 2, wherein the first (12) or second (14) processors are configured to combine the first rendered portions of a higher z-order of the display information compared to the second rendered portion.

4. A display method comprising:
(a) categorizing (80) display information as being of at least a first or a second category;
(b) evaluating (82) a performance metric of a display system configured to display the display information;
(c) allocating (84) a first portion of the display information for rendering on a first processor of the display system, and allocating a second portion of the display information for rendering on a second processor of the display system, based on the performance metric and on the category of the display information;
(d) rendering (86) the first portion of the display information being of the first category using the first processor, and rendering the second portion of the display information being of the second category using the second processor;
(e) storing (88) the first rendered portion of the display information in a first buffer, and storing the second rendered portion of the display information in a second buffer;
(f) combining (90) the first and second rendered portions stored in the first and second buffers into a graphics frame;
(g) displaying (92) the graphics frame.

5. The display method of claim 4, wherein after step (a), there is the step of:
(a1) allocating to a first virtual layer in the first buffer the display information of the first category, and allocating to a second virtual layer in the second buffer the display information of the second category.

6. The display method of claims 4 or 5, wherein in the combining step (f), the first rendered portions are higher in a z-order of the display information compared to the second rendered portion.

7. The display method of claims 4 to 6, wherein in step (c), the first portion of the display information comprises display information of a graphical user interface.

8. The display method of claims 4 to 7, wherein the performance metric of the display system comprises a comparison of spare processing cycles between the first and the second processors.

9. The display method of claims 4 to 8, wherein in step (c), the first portion and the second portion each comprise different sections of the same graphics frame.

10. The display method of claim 4, wherein in step (c), the first portion and the second portion each comprise complete graphics frames to be displayed successively.

11. The display method of claims 4 to 10, wherein after step (b), there is the step of:
(b1) evaluating a complexity metric of the display information;
and after step (c), there is the step of:
(c1) allocating first portions and second portions of the display information for rendering between a first or a second processor, based on the complexity metric of the display information.

12. The display method of claims 4 to 11, wherein the first buffer is associated with the first processor, and the second buffer is associated with the second processor.

13. A computer program element which, when being executed on one or more processors of a computer system, instructs the system to perform the method steps of one of claims 4 to 12.

14. A computer readable medium on which a program element according to claim 13 is stored.

15. A road vehicle (100) comprising a display system according to claims 10 to 12.
